# EUROPEAN PATENT SPECIFICATION

(11) **EP 4 057 394 B1**
(45) Date of publication and mention of the grant of the patent: **14.02.2024**
(21) Application number: 21760388.5
(22) Date of filing: 26.02.2021
(51) Int. Cl.: H01M 4/62, H01M 10/052, C01G 53/00, H01M 4/139, H01M 4/04, H01M 4/02, H01M 10/058, H01M 10/44

(54) **IRREVERSIBLE ADDITIVE, POSITIVE ELECTRODE INCLUDING IRREVERSIBLE ADDITIVE, AND LITHIUM SECONDARY BATTERY INCLUDING THE POSITIVE ELECTRODE**
IRREVERSIBLES ADDITIV, POSITIVE ELEKTRODE, DIE DAS IRREVERSIBLE ADDITIV UMFASST, UND LITHIUM-SEKUNDÄRBATTERIE, DIE DIE POSITIVE ELEKTRODE UMFASST
ADDITIF IRRÉVERSIBLE, ÉLECTRODE POSITIVE COMPRENANT L'ADDITIF IRRÉVERSIBLE, ET BATTERIE SECONDAIRE AU LITHIUM COMPRENANT L'ÉLECTRODE POSITIVE

(30) Priority: 26.02.2020 KR 20200023935
(43) Date of publication of application: 14.09.2022
(73) Proprietor: LG Energy Solution, Ltd., Seoul 07335 (KR)
(72) Inventor: YOO, Tae Gu, Daejeon 34122 (KR); PARK, Byung Chun, Daejeon 34122 (KR); LEE, Bo Ram, Daejeon 34122 (KR); KIM, Tae Gon, Daejeon 34122 (KR); KWAK, Min, Daejeon 34122 (KR); JUNG, Wang Mo, Daejeon 34122 (KR)
(74) Representative: Hoffmann Eitle
(86) International application number: PCT/KR2021/002454
(87) International publication number: WO 2021/172933

(56) References cited:
- JP-A- H05 198 301
- JP-A- H07 320 741
- JP-A- 2000 503 622
- KR-A- 20090 011 219
- KR-A- 20140 092 739
- KR-A- 20180 014 040
- KR-A- 20190 056 997
- PARK HOSANG ET AL: "Li2NiO2as a sacrificing positive additive for lithium-ion batteries", ELECTROCHIMICA ACTA, ELSEVIER, AMSTERDAM, NL, vol. 108, 2 July 2013 (2013-07-02), pages 591-595, XP028757637, ISSN: 0013-4686, DOI: 10.1016/J.ELECTACTA.2013.06.117

## Description

### [Technical Field]

### Cross-Reference to Related Application

This application claims priority from Korean Patent Application No. 10-2020-0023935, filed on February 26, 2020.

### Technical Field

The present invention relates to a method of preparing an irreversible positive electrode additive for a secondary battery, an irreversible positive electrode additive prepared thereby, a positive electrode for a secondary battery, including the irreversible positive electrode additive, and a lithium secondary battery including the positive electrode.

### [Background Art]

As technology for mobile devices is developed and the demand for mobile devices increases, the demand for secondary batteries as a power source is rapidly increasing, and among secondary batteries, lithium secondary batteries having a high energy density, a high operating potential, a long cycle lifespan, and a low self-discharge rate have been commercialized and widely used.

Lithium secondary batteries generally consist of a positive electrode including a positive electrode active material, a negative electrode including a negative electrode active material, a separator, and an electrolyte and are secondary batteries that are charged and discharged by intercalation and deintercalation of lithium ions. Due to having advantageous features such as a high energy density, a large electromotive force, and the ability to exhibit high capacity, lithium secondary batteries have been applied to various fields.

To realize high capacity lithium secondary batteries, various methods have been studied. Specifically, an attempt to realize high capacity lithium secondary batteries by using one type or at least two types of materials selected from LiCoO₂ (LCO), lithium manganese composite metal oxides (LiMnO₂, LiMn₂O₄, etc.), nickel cobalt manganese-based lithium composite metal oxides (LNCMO), in which a part of Ni is substituted with Mn and Co, and the like as a positive electrode active material included in the positive electrode for lithium secondary batteries has been made. However, to practically increase the capacity of lithium secondary batteries, not only the capacity of the positive electrode but also the capacity of the negative electrode needs to be enhanced. For this purpose, an attempt to use a silicon-based negative electrode active material with high capacity in the negative electrode has also been made. However, in the case of batteries using the silicon-based negative electrode active materials, an electrolyte is decomposed to cause the formation of a solid electrolyte interphase (SEI) layer on the surface of the negative electrode active material during initial charging, and accordingly, irreversible capacity is generated. Due to the generation of irreversible capacity, energy density is decreased, and thus the theoretical capacity of secondary batteries is not sufficiently used.

Therefore, to improve irreversible capacity, Li₂NiO₂, Li₂CuO₄, Li₆CoO₄, or the like was added as an irreversible positive electrode additive. In this case, Li₂NiO₂ is synthesized by a solid-state method of Li₂O and NiO, and due to a low synthesis rate, Li₂O and NiO are basically left as unreacted materials. The unreacted materials, LizO and NiO, are difficult to exhibit capacity, and particularly, LizO may be converted into LiOH and Li₂CO₃, which leads to the occurrence of gelation during the manufacture of a positive electrode and the generation of gas during charging/discharging and high-temperature storage of the lithium secondary battery.

### [Related-Art Documents]

### [Patent Documents]

(Patent Document 1) Korean Unexamined Patent Publication No. 2019-0056997

### [Disclosure]

### [Technical Problem]

The present invention is directed to providing a method of preparing an irreversible positive electrode additive, which is capable of enhancing a synthesis rate of a lithium nickel composite oxide (e.g., Li₂NiO₂), which is an irreversible positive electrode additive, and reducing the content of unreacted materials Li₂O and NiO, thereby suppressing gelation during the manufacture of a positive electrode and reducing gas generation during charging/discharging and high-temperature storage of a lithium secondary battery, an irreversible positive electrode additive prepared thereby, and a positive electrode and a lithium secondary battery which include the irreversible positive electrode additive.

### [Technical Solution]

One aspect of the present invention provides a method of preparing an irreversible positive electrode additive for a secondary battery, which includes mixing Li₂O, NiO, and NH₄VO₃ and performing thermal treatment to prepare a lithium nickel composite oxide represented by Chemical Formula 1 below, wherein the NH₄VO₃ is mixed in an amount of 1.5 to 6.5 parts by weight with respect to a total of 100 parts by weight of the Li₂O, NiO, and NH₄VO₃.

[Chemical Formula 1] Li₂₊ₐNi_{1-b-c}M¹_{b}V_{c}O_{2-d}A_{d}

In Chemical Formula 1,
M¹ is at least one selected from the group consisting of Cu, Mg, Pt, Al, Co, P, W, Zr, Nb, and B, A is at least one selected from the group consisting of F, S, Cl, and Br, and 0≤a≤0.2, 0≤b≤0.5, 0.01≤c≤0.065, and 0≤d≤0.2 are satisfied.

Another aspect of the present invention provides a method of manufacturing a positive electrode for a secondary battery, which includes: mixing an irreversible positive electrode additive for a secondary battery prepared by the above-described method, a conductive material, and a binder to prepare a positive electrode slurry; and applying the positive electrode slurry onto a positive electrode current collector to manufacture a positive electrode.

Still another aspect of the present invention provides an irreversible positive electrode additive for a secondary battery, which includes a lithium nickel composite oxide represented by Chemical Formula 1 below, Li₂O, and NiO, wherein the lithium nickel composite oxide is included in an amount of 90 to 95 wt% with respect to the total weight of the lithium nickel composite oxide, Li₂O, and NiO.

[Chemical Formula 1] Li₂₊ₐNi_{1-b-c}M¹_{b}V_{c}O_{2-d}A_{d}

In Chemical Formula 1,
M¹ is at least one selected from the group consisting of Cu, Mg, Pt, Al, Co, P, W, Zr, Nb, and B, A is at least one selected from the group consisting of F, S, Cl, and Br, and 0≤a≤0.2, 0≤b≤0.5, 0.01≤c≤0.065, and 0≤d≤0.2 are satisfied.

Yet another aspect of the present invention provides a positive electrode for a secondary battery, which includes the above-described irreversible positive electrode additive for a secondary battery, a conductive material, and a binder.

Yet another aspect of the present invention provides a lithium secondary battery which includes: the above-described positive electrode for a secondary battery; a negative electrode disposed to face the positive electrode; and a separator interposed between the positive electrode and the negative electrode.

### [Advantageous Effects]

According to the present invention, it is possible to suppress gelation during the manufacture of a positive electrode and reduce gas generation during charging/discharging and high-temperature storage of a lithium secondary battery by enhancing a synthesis rate of a lithium nickel composite oxide (e.g., Li₂NiO₂), which is an irreversible positive electrode additive, and reducing the content of unreacted materials Li₂O and NiO.

### [Modes of the Invention]

Hereinafter, the present invention will be described in more detail to facilitate understanding of the present invention. Terms and words used in this specification and claims should not be interpreted as being limited to commonly used meanings or meanings in dictionaries, and, based on the principle that the inventors can appropriately define concepts of terms in order to describe their invention in the best way, the terms and words should be interpreted with meanings and concepts which are consistent with the technological spirit of the present invention.

### <Irreversible positive electrode additive>

The present invention provides a method of preparing an irreversible positive electrode additive for a secondary battery, which includes mixing Li₂O, NiO, and NH₄VO₃ and performing thermal treatment to prepare a lithium nickel composite oxide represented by Chemical Formula 1 below, wherein the NH₄VO₃ is mixed in an amount of 1.5 to 6.5 parts by weight with respect to a total of 100 parts by weight of the Li₂O, NiO, and NH₄VO₃.

[Chemical Formula 1] Li₂₊ₐNi_{1-b-c}M¹_{b}V_{c}O_{2-d}A_{d}

In Chemical Formula 1,
M¹ is at least one selected from the group consisting of Cu, Mg, Pt, Al, Co, P, W, Zr, Nb, and B, A is at least one selected from the group consisting of F, S, Cl, and Br, and 0≤a≤0.2, 0≤b≤0.5, 0.01≤c≤0.065, and 0≤d≤0.2 are satisfied.

According to the present invention, since a specific amount of NH₄VO₃ may be added in addition to Li₂O and NiO in the preparation of the lithium nickel composite oxide of Chemical Formula 1 as an irreversible positive electrode additive so as to induce V doping, a synthesis rate of the lithium nickel composite oxide of Chemical Formula 1 is substantially enhanced, and the content of unreacted materials Li₂O and NiO is reduced, resulting in a reduction of gas generation. Specifically, when a specifically small amount of NH₄VO₃ is added as a V doping source, ammonium of NH₄VO₃ causes the formation of defects in NiO in a temperature range of 200 to 300 °C, and thus the contact area between Li₂O and the dopant V may increase, thereby enhancing a synthesis rate of the lithium nickel composite oxide of Chemical Formula 1 and simultaneously increasing the doping effect. Also, vanadium (V) of NH₄VO₃ has effects of reducing impurities, reducing unreacted materials, and reducing a gas generation amount by decreasing the contact area with an electrolyte solution and enhancing a synthesis rate.

In the present invention, an amount of added NH₄VO₃ can be 1.5 to 6.5 parts by weight with respect to a total of 100 parts by weight of the Li₂O, NiO, and NH₄VO₃. The amount of added NH₄VO₃ may specifically be 2 to 5.5 parts by weight, more specifically 3 to 5.5 parts by weight, and even more specifically 4 to 5.5 parts by weight, with respect to a total of 100 parts by weight of the Li₂O, NiO, and NH₄VO₃. When NH₄VO₃ is mixed within the above-described range with respect to a total of 100 parts by weight of the Li₂O, NiO, and NH₄VO₃, a synthesis rate of the lithium nickel composite oxide of Chemical Formula 1 can be substantially enhanced, and a gas generation amount can be reduced. Meanwhile, when the amount of added NH₄VO₃ is less than 1.5 parts by weight with respect to a total of 100 parts by weight of the Li₂O, NiO, and NH₄VO₃, a synthesis rate of the lithium nickel composite oxide may be insignificantly enhanced, and when the amount of added NH₄VO₃ exceeds 6.5 parts by weight with respect to a total of 100 parts by weight of the Li₂O, NiO, and NH₄VO₃, a reduction reaction of NiO and the like becomes dominant over a formation reaction of a lithium nickel composite oxide due to the presence of excessive ammonium, and thus a synthesis rate of the lithium nickel composite oxide may be decreased.

In the lithium nickel composite oxide of Chemical Formula 1 prepared as described above, a range of c, that is, a molar proportion of vanadium (V), may satisfy 0.01≤c≤0.065, specifically 0.015≤c≤0.055, more specifically 0.025≤c≤0.055, and even more specifically 0.035≤c≤0.055. When vanadium (V) is contained within the above-described range, a synthesis rate of the lithium nickel composite oxide of Chemical Formula 1 can be enhanced, and a gas reduction effect can occur.

The Li₂O and NiO may be mixed in a Li₂O/NiO molar ratio of 0.9 to 1.1, specifically 0.92 to 1.05, and more specifically 0.95 to 1.03. When Li₂O and NiO are mixed in the above-described molar ratio range, an appropriate amount of Li is used to produce a lithium nickel composite oxide, and thus an unreacted material Li₂O can be reduced.

The thermal treatment may be performed at 600 to 800 °C, specifically 650 to 750 °C, and more specifically 670 to 720 °C. When the thermal treatment is performed at the above-described temperature, crystallinity can be maximally obtained while maximizing a synthesis rate of the lithium nickel composite oxide. The thermal treatment may be specifically performed under an inert (e.g., N₂, Ar) atmosphere for 10 to 20 hours.

The lithium nickel composite oxide prepared as described above may be represented by Chemical Formula 1, and the oxide represented by Chemical Formula 1 may contain lithium and nickel in a molar ratio of 1.5 to 2:1, specifically in a molar ratio of 1.8 to 2:1, and more specifically in a molar ratio of 2:1. Specifically, the lithium nickel composite oxide represented by Chemical Formula 1 may be Li₂Ni_{1-c'}V_{c'}O₂ (c' ranges from 0.01 to 0.065, specifically, from 0.015 to 0.055, more specifically, from 0.025 to 0.055, and even more specifically, from 0.035 to 0.055). When the molar ratio of lithium and nickel satisfies the above-described range, an orthorhombic crystal structure can be stably formed, and a gas generation amount can be reduced by doping with vanadium (V) in the above-described content ratio.

According to the present invention, since NH₄VO₃ is added together with Li₂O and NiO in the preparation of the lithium nickel composite oxide of Chemical Formula 1 as an irreversible positive electrode additive, a synthesis rate of the lithium nickel composite oxide can be enhanced, and the content of unreacted materials Li₂O and NiO can be reduced. As a result, the conversion of Li₂O into LiOH and Li₂CO₃ is decreased, and thus reactivity with an electrolyte solution can be decreased, and gas generation can be reduced.

In addition, the present invention provides an irreversible positive electrode additive prepared by the above-described method.

The irreversible positive electrode additive includes a lithium nickel composite oxide represented by Chemical Formula 1 below, Li₂O, and NiO and includes the lithium nickel composite oxide in an amount of 90 to 95 wt% with respect to the total weight of the lithium nickel composite oxide, Li₂O, and NiO.

[Chemical Formula 1] Li₂₊ₐNi_{1-b-c}M¹_{b}V_{c}O_{2-d}A_{d}

In Chemical Formula 1,
M¹ is at least one selected from the group consisting of Cu, Mg, Pt, Al, Co, P, W, Zr, Nb, and B, A is at least one selected from the group consisting of F, S, Cl, and Br, and 0≤a≤0.2, 0≤b≤0.5, 0.01≤c≤0.065, and 0≤d≤0.2 are satisfied.

In the lithium nickel composite oxide of Chemical Formula 1, a range of c, that is, a molar proportion of vanadium (V) may specifically satisfy 0.015≤c≤0.055, more specifically 0.025≤c≤0.055, and even more specifically 0.035≤c≤0.055. When vanadium (V) is contained within the above-described range, a synthesis rate of the lithium nickel composite oxide can be enhanced, and a gas reduction effect can be produced.

The irreversible positive electrode additive may include the lithium nickel composite oxide in an amount of 90 to 95 wt%, specifically 91 to 95 wt%, and more specifically 92 to 95 wt%, with respect to the total weight of the lithium nickel composite oxide, Li₂O, and NiO. This can be considered to be a result of enhancing a synthesis rate by synthesis with the addition of NH₄VO₃. Meanwhile, the irreversible positive electrode additive may include the unreacted material Li₂O in an amount of 5 wt% or less, specifically 4 wt% or less, and more specifically 3 wt% or less, with respect to the total weight of the lithium nickel composite oxide, Li₂O, and NiO. In addition, the irreversible positive electrode additive may include the unreacted material NiO in an amount of 9 wt% or less, specifically 8 wt% or less, and more specifically 7 wt% or less, with respect to the total weight of the lithium nickel composite oxide, Li₂O, and NiO. It can be considered that the content of the unreacted materials Li₂O and NiO may be reduced as a result of enhancing a synthesis rate by synthesis with the addition of NH₄VO₃.

### <Positive electrode and lithium secondary battery>

In addition, the present invention provides a positive electrode for a secondary battery and a lithium secondary battery, either of which can include the irreversible positive electrode additive prepared as described above.

Specifically, the positive electrode for a secondary battery includes a positive electrode current collector and a positive electrode active material layer formed on the positive electrode current collector and including the positive electrode active material.

In the positive electrode, the positive electrode current collector is not particularly limited as long as it does not cause a chemical change in the battery and has conductivity. For example, stainless steel, aluminum, nickel, titanium, fired carbon, or aluminum or stainless steel whose surface has been treated with carbon, nickel, titanium, silver, or the like may be used as the positive electrode current collector. In addition, the positive electrode current collector may typically have a thickness of 3 µm to 500 µm and have fine irregularities formed on the surface thereof to increase the adhesion of the positive electrode active material. Additionally, the positive electrode current collector may be used in any of various forms such as a film, a sheet, a foil, a net, a porous material, a foam, a non-woven fabric, and the like.

In addition, the positive electrode active material layer may include a conductive material and a binder in addition to the above-described irreversible positive electrode additive.

In this case, the conductive material is used to impart conductivity to the electrode, and any conductive material that does not cause a chemical change in the battery and has electron conductivity may be used without particular limitation. Specific examples of the conductive material include: graphite such as natural graphite, artificial graphite, or the like; a carbon-based material such as carbon black, acetylene black, Ketjen black, channel black, furnace black, lamp black, thermal black, carbon fiber, or the like; a metal powder or metal fiber containing copper, nickel, aluminum, silver, or the like; a conductive whisker such as zinc oxide, potassium titanate, or the like; a conductive metal oxide such as titanium oxide or the like; and a conductive polymer such as a polyphenylene derivative or the like, which may be used alone or in combination of two or more thereof. The conductive material may be typically included in an amount of 1 to 30 wt% with respect to the total weight of the positive electrode active material layer.

The binder serves to enhance cohesion between positive electrode active material particles and adhesion between the positive electrode active material and the positive electrode current collector. Specific examples of the binder include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), a sulfonated EPDM, styrene butadiene rubber (SBR), fluoro-rubber, and various copolymers thereof, which may be used alone or in combination of two or more thereof. The binder may be included in an amount of 1 to 30 wt% with respect to the total weight of the positive electrode active material layer.

In addition, the positive electrode active material layer may further include a positive electrode active material other than the irreversible positive electrode additive. As a specific example, lithium transition metal oxides typically used as a positive electrode active material may be used without limitation, and specifically, lithium transition metal oxides containing one or more transition metal cations selected from the group consisting of cobalt (Co), nickel (Ni), and manganese (Mn) may be used. For example, the positive electrode active material includes: a layered compound such as a lithium cobalt oxide (LiCoO₂), a lithium nickel oxide (LiNiO₂), or the like; a lithium manganese oxide such as the chemical formula Li₁₊ₙMn₂₋ₙO₄ (where n=0 to 0.33), LiMnO₃, LiMn₂O₃, LiMnO₂, or the like; a Ni-site-type lithium nickel oxide represented by the chemical formula LiNi₁₋ₘM^{a}ₘO₂ (where M^{a}= Co, Mn, Al, Cu, Fe, Mg, B, or Ga, m=0.01 to 0.3); a lithium manganese composite oxide represented by the chemical formula LiMn_{2-z}M^{b}_{z}O₂ (where M^{b} = Co, Ni, Fe, Cr, Zn, or Ta, z= 0.01 to 0.1) or Li₂Mn₃M^{c}O₈ (where M^{c} = Fe, Co, Ni, Cu, or Zn); a lithium manganese composite oxide represented by LiNiᵣMn₂₋ᵣO₄ (where r=0.01 to 1) and having a spinel structure, a lithium iron phosphate compound (LiFePO₄), and the like, but the present invention is not limited thereto. Alternatively, as the positive electrode active material, a lithium composite transition metal oxide represented by Chemical Formula 2 below may be included.

[Chemical Formula 2] Liₓ₁Ni_{1-y1-z1-s1}Co_{y1}Mn_{z1}Qₛ₁O_{2+δ}

In Chemical Formula 2, Q is one or more elements selected from the group consisting of Al, Zr, Ti, Mg, Ta, Nb, Mo, and Cr, and 0.9≤x1≤1.5, 0≤y1≤0.5, 0≤z1≤0.5, 0≤s1≤0.1, and -0.1≤δ≤1.0 are satisfied.

The positive electrode may be manufactured by a typical method of manufacturing a positive electrode, except that the above-described irreversible positive electrode additive is used. Specifically, the positive electrode may be manufactured by mixing the above-described irreversible positive electrode additive, a binder, a conductive material, and optionally, an additional positive electrode active material, to prepare a positive electrode slurry, and applying the positive electrode slurry onto a positive electrode current collector, followed by drying and roll pressing. In this case, the types and contents of the positive electrode active material, the binder, and the conductive material have been described above.

As a solvent, a solvent generally used in the art may be used, and examples of the solvent include dimethyl sulfoxide (DMSO), isopropyl alcohol, N-methyl pyrrolidone (NMP), acetone, water, and the like, which may be used alone or in combination of two or more thereof. The solvent is used in an amount sufficient to dissolve or disperse the positive electrode active material, the conductive material, and the binder and to have a viscosity capable of achieving excellent thickness uniformity upon subsequent application for manufacturing the positive electrode in consideration of a thickness of an applied slurry and a manufacturing yield.

According to another method, the positive electrode may be manufactured by laminating, on a positive electrode current collector, a film obtained by casting the positive electrode slurry on a separate support and removing it from the support.

Still another aspect of the present invention provides an electrochemical device including the above-described positive electrode. The electrochemical device may specifically be a battery, a capacitor, or the like, and more specifically, a lithium secondary battery.

The lithium secondary battery specifically includes a positive electrode, a negative electrode disposed to face the positive electrode, a separator interposed between the positive electrode and the negative electrode, and an electrolyte. The positive electrode has been described above. In addition, the lithium secondary battery may optionally further include: a battery container which accommodates an electrode assembly including the positive electrode, the negative electrode, and the separator; and a sealing member which seals the battery container.

In the lithium secondary battery, the negative electrode includes a negative electrode current collector and a negative electrode active material layer disposed on the negative electrode current collector.

The negative electrode current collector is not particularly limited as long as it does not cause a chemical change in the battery and has high conductivity. For example, copper, stainless steel, aluminum, nickel, titanium, fired carbon, copper or stainless steel whose surface has been treated with carbon, nickel, titanium, silver, or the like, an aluminum-cadmium alloy, or the like may be used as the negative electrode current collector. In addition, the negative electrode current collector may typically have a thickness of 3 µm to 500 µm and have fine irregularities formed on the surface thereof to increase the adhesion of a negative electrode active material like the positive electrode current collector. Additionally, the negative electrode current collector may be used in any of various forms such as a film, a sheet, a foil, a net, a porous material, a foam, a non-woven fabric, and the like.

The negative electrode active material layer includes a negative electrode active material and, optionally, a binder and a conductive material. For example, the negative electrode active material layer may be formed by applying a composition for forming a negative electrode, which includes a negative electrode active material and, optionally, a binder and a conductive material, onto a negative electrode current collector and then drying the same, or by laminating, on a negative electrode current collector, a film obtained by casting the composition for forming a negative electrode on a separate support and removing it from the support.

As the negative electrode active material, a compound that enables the reversible intercalation and deintercalation of lithium may be used. Specific examples of the negative electrode active material include: a carbonaceous material such as artificial graphite, natural graphite, graphitized carbon fiber, amorphous carbon, or the like; a metallic compound capable of alloying with lithium, such as Si, Al, Sn, Pb, Zn, Bi, In, Mg, Ga, Cd, a Si alloy, a Sn alloy, an Al alloy, or the like; a metal oxide capable of doping and dedoping lithium, such as SiO_{β} (0<β<2), SnO₂, vanadium oxide, or lithium vanadium oxide; and a composite including the metallic compound and the carbonaceous material, such as a Si-C composite or a Sn-C composite, which may be used alone or in combination of two or more thereof. In addition, a lithium metal thin film may be used as the negative electrode active material. Additionally, as a carbon material, both low-crystallinity carbon and high-crystallinity carbon may be used. Representative examples of the low-crystallinity carbon include soft carbon and hard carbon, and representative examples of the high-crystallinity carbon include amorphous, platy, flaky, spherical or fibrous natural graphite or artificial graphite, Kish graphite, pyrolytic carbon, mesophase pitch-based carbon fiber, meso-carbon microbeads, mesophase pitches, and high-temperature fired carbon such as petroleum or coal tar pitch-derived cokes, and the like. To enhance capacity, specifically, a Si-based negative electrode active material may be used as the negative electrode active material.

In addition, the binder and the conductive material are the same as those described for the positive electrode.

Meanwhile, in the lithium secondary battery, the separator serves to separate the negative electrode and the positive electrode and provide a passage for lithium ion migration. As the separator, any separator that is typically used in a lithium secondary battery may be used without particular limitation, and in particular, a separator that exhibits low resistance to the migration of electrolyte ions and has an excellent electrolyte impregnation ability is preferred. Specifically, a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer, or the like or a stacked structure having two or more layers thereof, may be used. In addition, a typical porous non-woven fabric, for example, a non-woven fabric made of high-melting-point glass fiber, polyethylene terephthalate fiber, or the like may be used. Also, to ensure heat resistance or mechanical strength, a coated separator which includes a ceramic component or polymer material and is optionally in a single-layer or multi-layer structure may be used.

In addition, as the electrolyte used in the present invention, an organic liquid electrolyte, an inorganic liquid electrolyte, a solid polymer electrolyte, a gel-type polymer electrolyte, an inorganic solid electrolyte, a molten-type inorganic electrolyte, or the like, which is usable in the manufacture of the lithium secondary battery, may be used, but the present invention is not limited thereto.

Specifically, the electrolyte may include an organic solvent and a lithium salt.

As the organic solvent, any solvent that may function as a medium through which ions involved in an electrochemical reaction of the battery can migrate may be used without particular limitation. Specifically, the organic solvent may be: an ester-based solvent such as methyl acetate, ethyl acetate, γ-butyrolactone, ε-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; a carbonate-based solvent such as dimethyl carbonate (DMC), diethyl carbonate (DEC), methyl ethyl carbonate (MEC), ethyl methyl carbonate (EMC), ethylene carbonate (EC), propylene carbonate (PC), or the like; an alcohol-based solvent such as ethyl alcohol, isopropyl alcohol, or the like; a nitrile such as R-CN (R is a C2-C20 hydrocarbon group with a linear, branched or cyclic structure and may include a double-bonded aromatic ring or an ether linkage) or the like; an amide such as dimethylformamide or the like; dioxolane such as 1,3-dioxolane or the like; or sulfolane. Among those listed above, the carbonate-based solvent is preferred, and a mixture of a cyclic carbonate-based compound with high ion conductivity and high permittivity (e.g., EC, PC, etc.) and a linear carbonate-based compound with low viscosity (e.g., EMC, DMC, DEC, etc.), which may increase the charging/discharging performance of the battery, is more preferred. In this case, when a mixture obtained by mixing the cyclic carbonate-based compound and the linear carbonate-based compound in a volume ratio of about 1:1 to about 1:9 is used, excellent electrolyte performance may be exhibited.

As the lithium salt, any compound that is capable of providing lithium ions used in a lithium secondary battery may be used without particular limitation. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt is preferably used at a concentration of 0.1 to 2.0 M. When the concentration of the lithium salt is within the above-described range, the electrolyte has appropriate levels of conductivity and viscosity, and thus excellent electrolyte performance can be exhibited, and lithium ions can effectively migrate.

In addition to the above-described electrolyte components, the electrolyte may further include at least one additive selected from a haloalkylene carbonate-based compound such as difluoroethylene carbonate and the like, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, an ethylene glycol dialkyl ether, an ammonium salt, pyrrole, 2-methoxyethanol, aluminum trichloride, and the like for the purpose of enhancing the lifetime characteristics of the battery, suppressing a decrease in battery capacity, enhancing the discharge capacity of the battery, or the like. In this case, the additive may be included in an amount of 0.1 to 5 wt% with respect to the total weight of the electrolyte.

Since the lithium secondary battery including the positive electrode active material according to the present invention stably exhibits excellent discharge capacity, excellent output characteristics, and an excellent capacity retention rate, it is useful in the fields of portable devices such as mobile phones, notebook computers, digital cameras, and the like and electric vehicles such as hybrid electric vehicles (HEVs) and the like.

Accordingly, yet another aspect of the present invention provides a battery module including the lithium secondary battery as a unit cell and a battery pack including the battery module.

The battery module or battery pack may be used as a power source for one or more medium-to-large-sized devices selected from power tools; electric vehicles (EVs), hybrid electric vehicles, and plug-in hybrid electric vehicles (PHEVs); and systems for storing electric power.

Hereinafter, the present invention will be described in detail with reference to embodiments so that those skilled in the art can easily carry out the present invention. However, the present invention may be embodied in several different forms, and therefore, is not limited to embodiments described herein.

### Example 1

Li₂O and NiO were mixed so that a Li/Ni molar ratio was 2.0, and NH₄VO₃ was mixed therewith in an amount of 2 parts by weight with respect to a total of 100 parts by weight of the Li₂O, NiO, and NH₄VO₃. Afterward, thermal treatment was performed at 685 °C under a N₂ atmosphere for 10 hours to prepare an irreversible positive electrode additive represented by Li₂Ni_{0.982}V_{0.018}O₂.

### Example 2

An irreversible positive electrode additive represented by Li₂Ni_{0.972}V_{0.028}O₂ was prepared in the same manner as in Example 1, except that NH₄VO₃ was mixed in an amount of 3 parts by weight with respect to a total of 100 parts by weight of the Li₂O, NiO, and NH₄VO₃.

### Example 3

An irreversible positive electrode additive represented by Li₂Ni_{0.963}V_{0.037}O₂ was prepared in the same manner as in Example 1, except that NH₄VO₃ was mixed in an amount of 4 parts by weight with respect to a total of 100 parts by weight of the Li₂O, NiO, and NH₄VO₃.

### Example 4

An irreversible positive electrode additive represented by Li₂Ni_{0.948}V_{0.052}O₂ was prepared in the same manner as in Example 1, except that NH₄VO₃ was mixed in an amount of 5.5 parts by weight with respect to a total of 100 parts by weight of the Li₂O, NiO, and NH₄VO₃.

### Comparative Example 1

An irreversible positive electrode additive represented by Li₂NiO₂ was prepared in the same manner as in Example 1, except that NH₄VO₃ was not mixed.

### Comparative Example 2

An irreversible positive electrode additive was prepared in the same manner as in Example 1, except that VO was mixed in an amount of 3 parts by weight instead of NH₄VO₃.

### Comparative Example 3

An irreversible positive electrode additive was prepared in the same manner as in Example 1, except that NH₄Cl was mixed in an amount of 3 parts by weight instead of NH₄VO₃.

### Comparative Example 4

An irreversible positive electrode additive represented by Li₂Ni_{0.991}V_{0.009}O₂ was prepared in the same manner as in Example 1, except that NH₄VO₃ was mixed in an amount of 1 part by weight with respect to a total of 100 parts by weight of the Li₂O, NiO, and NH₄VO₃.

### Comparative Example 5

An irreversible positive electrode additive represented by Li₂Ni_{0.933}V_{0.067}O₂ was prepared in the same manner as in Example 1, except that NH₄VO₃ was mixed in an amount of 7 parts by weight with respect to a total of 100 parts by weight of the Li₂O, NiO, and NH₄VO₃.

### [Experimental Example 1: XRD analysis]

X-ray diffraction (XRD) data for the irreversible positive electrode additives prepared according to Examples 1 to 4 and Comparative Examples 1 to 5 was obtained and then analyzed, and results thereof are shown in Table 1 below.

An XRD measurement instrument, a sample preparation method, and measurement conditions are follows. XRD data was analyzed by a Rietveld refinement method using the complete structure model of phases present in a sample.
- Instrument: XRD-12-D8 Endeavor 2 equipped with a Lynxeye XE-T detector
- Sample preparation method: A sample was prepared by putting powder into the groove in the center of a general powder holder and making the surface even, that is, making the powder height equal to the height of the edge of the holder, using a slide glass.
- Analysis conditions:
   Measurement range (2 theta): 10° to 90°
   Step size (2 theta): 0.006°
   Measurement time (time/step): 38.4 s
   X-ray (Cu): 40 kV and 40 mA
   Divergence slit: 0.2°
   Goniometer radii: 200.5 mm

**[Table 1]**

| | Lithium nickel composite oxide (wt%) | Li₂O (wt%) | NiO (wt%) |
|---|---|---|---|
| Example 1 | 91.7 | 2.9 | 5.4 |
| Example 2 | 90.3 | 2.8 | 6.9 |
| Example 3 | 92.4 | 2.4 | 5.2 |
| Example 4 | 91.0 | 0.1 | 8.9 |
| Comparative Example 1 | 88.7 | 4.9 | 6.4 |
| Comparative Example 2 | not synthesized | - | - |
| Comparative Example 3 | 89.2 | 2 | 8.8 |
| Comparative Example 4 | 89.6 | 3 | 7.4 |
| Comparative Example 5 | 86.5 | 7 | 6.5 |

Referring to Table 1, Examples 1 to 4 exhibited increased synthesis rates of a lithium nickel composite oxide and reduced amounts of unreacted materials Li₂O and NiO as compared to Comparative Examples 1 to 5. For reference, in the case of Comparative Example 5, a reduction reaction of NiO and the like became dominant over a formation reaction of a lithium nickel composite oxide due to the presence of excessive ammonium in the preparation of an irreversible positive electrode additive, and thus a synthesis rate of a lithium nickel composite oxide was degraded.

### [Experimental Example 2: Evaluation of battery performance]

Each of the irreversible positive electrode additives prepared in Examples 1 to 4 and Comparative Examples 1 and 3 to 5, a Super-P conductive material, and a PVDF binder were mixed in a weight ratio of 95:2:3 in a N-methyl pyrrolidone solvent to prepare a positive electrode slurry, and the slurry was then applied onto one surface of an aluminum current collector, dried at 100 °C, and then roll-pressed to manufacture a positive electrode.

As a negative electrode, lithium metal was used.

A porous polyethylene separator was interposed between the manufactured positive electrode and the negative electrode to manufacture an electrode assembly. Then, the electrode assembly was placed inside a case, and an electrolyte solution was injected into the case to manufacture a lithium secondary battery. In this case, the electrolyte solution was prepared by dissolving 1.0 M lithium hexafluorophosphate (LiPF₆) in an organic solvent containing ethylene carbonate, ethyl methyl carbonate, and diethyl carbonate (EC/EMC/DEC volumetric mixing ratio=3/4/3).

Each manufactured lithium secondary battery cell was charged at 25 °C in the CC/CV mode of 0.1C up to 4.25 V (final current: 1/20C) and discharged at a constant current of 0.1C up to 2.5 V, and the charge and discharge capacities thereof were measured. Then, a change in the volume of the monocell was measured using a volumometer, to which Archimedes volume measurement is applied, to measure a gas generation amount at the 50^{th} cycle, and results thereof are shown in the following Table 2.

**[Table 2]**

| | Charge capacity (mAh/g) | Discharge capacity (mAh/g) | Gas generation amount (@50^{th} cycle) (µl/g) |
|---|---|---|---|
| Example 1 | 395.2 | 147.01 | 7.15 |
| Example 2 | 390.6 | 145.7 | 6.90 |
| Example 3 | 398.3 | 149.4 | 6.83 |
| Example 4 | 397.1 | 149.7 | 4.67 |
| Comparative Example 1 | 376.3 | 145.4 | 8.3 |
| Comparative Example 3 | 386.9 | 149.4 | 7.85 |
| Comparative Example 4 | 390.1 | 144.4 | 7.89 |
| Comparative Example 5 | 400.0 | 135.7 | 5.24 |

Referring to Table 2, it can be seen that Examples 1 to 4 exhibited improved capacity characteristics and reduced gas generation amounts at the 50^{th} cycle as compared to Comparative Examples 1, 3, and 4. Meanwhile, Comparative Example 5 had a high impurity content due to a low synthesis rate of a lithium nickel composite oxide, and accordingly, the severest gelation occurred in the manufacture of a positive electrode.

### [Experimental Example 3: Evaluation of high-temperature storage]

A lithium secondary battery cell was manufactured using each of the irreversible positive electrode additives prepared in Examples 1 to 4 and Comparative Examples 1, 3, and 4 as in Experimental Example 2, except that a negative electrode, which was manufactured by mixing graphite as a negative electrode active material, a carbon black conductive material, and a PVDF binder in a weight ratio of 95:1:4 in a N-methyl pyrrolidone solvent to prepare a composition for forming a negative electrode and applying the composition onto one surface of a copper current collector, was used.

Each manufactured lithium secondary battery monocell was charged in the CC/CV mode of 0.1C up to 4.2 V (final current: 1/20C). The charged monocell was stored in a chamber set to 60 °C for 4 weeks, and then a change in the volume of the monocell was measured using a volumometer, to which Archimedes volume measurement is applied, to evaluate a gas generation amount. Results thereof are shown in the following Table 3.

**[Table 3]**

| | Gas generation amount (µl/g) |
|---|---|
| Example 1 | 4.04 |
| Example 2 | 3.35 |
| Example 3 | 2.67 |
| Example 4 | 2.02 |
| Comparative Example 1 | 4.30 |
| Comparative Example 3 | 5.07 |
| Comparative Example 4 | 4.10 |

Referring to Table 3, it can be seen that Examples 1 to 4 exhibited substantially reduced gas generation amounts after 4-week storage compared to Comparative Examples 1, 3, and 4.

## Claims

1. A method of preparing an irreversible positive electrode additive for a secondary battery, the method comprising:
mixing Li₂O, NiO, and NH₄VO₃ and performing thermal treatment to prepare a lithium nickel composite oxide represented by Chemical Formula 1 below,
wherein the NH₄VO₃ is mixed in an amount of 1.5 to 6.5 parts by weight with respect to a total of 100 parts by weight of the Li₂O, NiO, and NH₄VO₃:
[Chemical Formula 1] Li₂₊ₐNi_{1-b-c}M¹_{b}V_{c}O_{2-d}A_{d}
in Chemical Formula 1,
M¹ is at least one selected from the group consisting of Cu, Mg, Pt, Al, Co, P, W, Zr, Nb, and B, A is at least one selected from the group consisting of F, S, Cl, and Br, and 0≤a≤0.2, 0≤b≤0.5, 0.01≤c≤0.065, and 0≤d≤0.2 are satisfied.

2. The method of claim 1, wherein the NH₄VO₃ is mixed in an amount of 2 to 5.5 parts by weight with respect to a total of 100 parts by weight of the Li₂O, NiO, and NH₄VO₃.

3. The method of claim 1, wherein, in Chemical Formula 1, 0.015≤c≤0.055 is satisfied.

4. The method of claim 1, wherein the Li₂O and NiO are mixed in a Li₂O/NiO molar ratio of 0.9 to 1.1.

5. The method of claim 1, wherein the thermal treatment is performed at 600 to 800 °C.

6. The method of claim 1, wherein the lithium nickel composite oxide is Li₂Ni_{1-c'}V_{c'}O₂ (c' ranges from 0.01 to 0.065).

7. A method of manufacturing a positive electrode for a secondary battery, the method comprising:
mixing an irreversible positive electrode additive for a secondary battery prepared according to claim 1, a conductive material, and a binder to prepare a positive electrode slurry; and
applying the positive electrode slurry onto a positive electrode current collector to manufacture a positive electrode.

8. An irreversible positive electrode additive for a secondary battery, comprising a lithium nickel composite oxide represented by Chemical Formula 1 below, Li₂O, and NiO,
wherein the lithium nickel composite oxide is included in an amount of 90 to 95 wt% with respect to a total weight of the lithium nickel composite oxide, Li₂O, and NiO:
[Chemical Formula 1] Li₂₊ₐNi_{1-b-c}M¹_{b}V_{c}O_{2-d}A_{d}
in Chemical Formula 1,
M¹ is at least one selected from the group consisting of Cu, Mg, Pt, Al, Co, P, W, Zr, Nb, and B, A is at least one selected from the group consisting of F, S, Cl, and Br, and 0≤a≤0.2, 0≤b≤0.5, 0.01≤c≤0.065, and 0≤d≤0.2 are satisfied.

9. The irreversible positive electrode additive of claim 8, wherein, in Chemical Formula 1, 0.015≤c≤0.055 is satisfied.

10. A positive electrode for a secondary battery, comprising the irreversible positive electrode additive for a secondary battery according to claim 8, a conductive material, and a binder.

11. A lithium secondary battery comprising:
the positive electrode for a secondary battery according to claim 10;
a negative electrode disposed to face the positive electrode; and
a separator interposed between the positive electrode and the negative electrode.

## Patentansprüche

1. Verfahren zur Herstellung eines irreversiblen positiven Elektrodenadditivs für eine Sekundärbatterie, wobei das Verfahren folgendes umfasst:
Mischen von Li₂O, NiO und NH₄VO₃ und Durchführen einer thermischen Behandlung, um ein Lithium-Nickel-Verbundoxid mit der folgenden Chemischen Formel 1 herzustellen,
wobei das NH₄VO₃ in einer Menge von 1,5 bis 6,5 Gewichtsteilen, bezogen auf eine Gesamtmenge von 100 Gewichtsteilen des Li₂O, NiO und NH₄VO₃, gemischt wird:
[Chemische Formel 1] Li₂₊ₐNi_{1-b-c}M¹_{b}V_{c}O_{2-d}A_{d}
in der chemischen Formel 1,
ist M¹ mindestens ein Vertreter, ausgewählt aus der Gruppe bestehend aus Cu, Mg, Pt, Al, Co, P, W, Zr, Nb und B, A ist mindestens ein Vertreter, ausgewählt aus der Gruppe bestehend aus F, S, Cl und Br, und 0≤a≤0,2, 0≤b≤0,5, 0,01≤c≤0,065, und 0≤d≤0,2 sind erfüllt.

2. Verfahren nach Anspruch 1, wobei das NH₄VO₃ in einer Menge von 2 bis 5,5 Gewichtsteilen, bezogen auf eine Gesamtmenge von 100 Gewichtsteilen Li₂O, NiO und NH₄VO₃, gemischt wird.

3. Verfahren nach Anspruch 1, wobei, in der chemischen Formel 1, 0,015≤c≤0,055 erfüllt ist.

4. Verfahren nach Anspruch 1, wobei das Li₂O und NiO in einem Li₂O/NiO-Molverhältnis von 0,9 bis 1,1 gemischt werden.

5. Verfahren nach Anspruch 1, wobei die thermische Behandlung bei 600 bis 800 °C durchgeführt wird.

6. Verfahren nach Anspruch 1, wobei das Lithium-Nickel-Verbundoxid Li₂Ni_{1-c'}V_{c'}O₂ ist (c' liegt im Bereich von 0,01 bis 0,065).

7. Verfahren zur Herstellung einer positiven Elektrode für eine Sekundärbatterie, wobei das Verfahren folgendes umfasst:
Mischen eines irreversiblen Positivelektrodenadditivs für eine gemäß Anspruch 1 hergestellte Sekundärbatterie, eines leitfähigen Materials und eines Bindemittels zur Herstellung einer positiven Elektrodenaufschlämmung; und
Aufbringen der positiven Elektrodenaufschlämmung auf einen positiven Elektrodenstromabnehmer zur Herstellung einer positiven Elektrode.

8. Irreversibles Positivelektrodenadditiv für eine Sekundärbatterie, umfassend ein Lithium-Nickel-Verbundoxid, mit der folgenden chemischen Formel 1, Li₂O und NiO,
wobei das Lithium-Nickel-Verbundoxid in einer Menge von 90 bis 95 Gew.-%, bezogen auf das Gesamtgewicht von Lithium-Nickel-Verbundoxid, Li₂O und NiO, eingeschlossen ist:
[Chemische Formel 1] Li₂₊ₐNi_{1-b-c}M¹_{b}V_{c}O_{2-d}A_{d}
in der chemischen Formel 1,
ist M¹ mindestens ein Vertreter, ausgewählt aus der Gruppe bestehend aus Cu, Mg, Pt, Al, Co, P, W, Zr, Nb und B, A ist mindestens ein Vertreter, ausgewählt aus der Gruppe bestehend aus F, S, Cl und Br, und 0≤a≤0,2, 0≤b≤0,5, 0,01≤c≤0,065, und 0≤d≤0,2 sind erfüllt.

9. Irreversibles Positivelektrodenadditiv nach Anspruch 8, wobei, in der chemischen Formel 1, 0,015≤c≤0,055 erfüllt ist.

10. Positive Elektrode für eine Sekundärbatterie, umfassend das irreversible Positivelektrodenadditiv für eine Sekundärbatterie nach Anspruch 8, ein leitfähiges Material und ein Bindemittel.

11. Lithium-Sekundärbatterie, umfassend:
die positive Elektrode für eine Sekundärbatterie gemäß Anspruch 10;
eine negative Elektrode, die so angeordnet ist, dass sie der positiven Elektrode gegenüberliegt; und
einen Separator, der zwischen der positiven Elektrode und der negativen Elektrode angeordnet ist.

## Revendications

1. Procédé destiné à préparer un additif d'électrode positive irréversible pour une batterie secondaire, le procédé comprenant :
mélanger Li₂O, NiO, et NH₄VO₃ et réaliser un traitement thermique pour préparer un oxyde composite au lithium-nickel représenté par la Formule chimique 1 ci-dessous,
dans lequel NH₄VO₃ est mélangé dans une quantité de 1,5 à 6,5 parties en poids par rapport à un total de 100 parties en poids du mélange Li₂O, NiO, et NH₄VO₃ :
[Formule chimique 1] Li₂₊ₐNi_{1-b-c}M¹b V_{c}O_{2-d}A_{d}
dans la Formule chimique 1,
M¹ est au moins un choisi dans le groupe consistant en Cu, Mg, Pt, Al, Co, P, W, Zr, Nb, et B, A est au moins un choisi dans le groupe consistant en F, S, Cl, et Br et 0≤a≤0,2, 0≤b≤0,5, 0,01≤c≤0,065 et 0≤d≤0,2 sont satisfaits.

2. Procédé selon la revendication 1, dans lequel NH₄VO₃ est mélangé dans une quantité de 2 à 5,5 parties en poids par rapport à un total de 100 parties en poids de Li₂O, NiO, et NH₄VO₃.

3. Procédé selon la revendication 1, dans lequel, dans la Formule chimique 1, 0,015≤c≤0,055 est satisfait.

4. Procédé selon la revendication 1, dans lequel Li₂O et NiO sont mélangés dans un rapport molaire Li₂O/NiO de 0,9 à 1,1.

5. Procédé selon la revendication 1, dans lequel le traitement thermique est réalisé à 600 à 800 °C.

6. Procédé selon la revendication 1, dans lequel l'oxyde composite au lithium-nickel est Li₂Ni_{1-c'}V_{c'}O₂ (c' est compris dans la plage de 0,01 à 0,065).

7. Procédé destiné à fabriquer une électrode positive pour une batterie secondaire, le procédé comprenant :
mélanger un additif d'électrode positive irréversible pour une batterie secondaire préparé selon la revendication 1, un matériau conducteur et un liant pour préparer une boue d'électrode positive ; et
appliquer la boue d'électrode positive sur un collecteur de courant d'électrode positive pour fabriquer une électrode positive.

8. Additif d'électrode positive irréversible pour une batterie secondaire, comprenant un oxyde composite au lithium-nickel représenté par la Formule chimique 1 ci-dessous Li₂O, et NiO,
dans lequel l'oxyde composite au lithium-nickel est inclus dans une quantité de 90 à 95 % en poids par rapport à un poids total de l'oxyde composite au lithium-nickel, Li₂O, et NiO :
[Formule chimique 1] Li₂₊ₐNi_{1-b-c}M¹_{b}V_{c}O_{2-d}A_{d}
dans la Formule chimique 1,
M¹ est au moins un choisi dans le groupe consistant en Cu, Mg, Pt, Al, Co, P, W, Zr, Nb et B, A est au moins un choisi dans le groupe consistant en F, S, Cl et Br et 0≤a≤0,2, 0≤b≤0,5, 0,01≤c≤0,065 et 0≤d≤0,2 sont satisfaits.

9. Additif d'électrode positive irréversible selon la revendication 8, dans lequel, dans la Formule chimique 1, 0,015≤c≤0,055 est satisfait.

10. Électrode positive pour une batterie secondaire, comprenant l'additif d'électrode positive irréversible pour une batterie secondaire selon la revendication 8, un matériau conducteur et un liant.

11. Batterie secondaire au lithium comprenant :
l'électrode positive pour une batterie secondaire selon la revendication 10 ;
une électrode négative disposée pour faire face à l'électrode positive ; et
un séparateur interposé entre l'électrode positive et l'électrode négative.
